# EUROPEAN PATENT APPLICATION

(11) **EP 1 193 632 A1**
(43) Date of publication of application: **03.04.2002**
(21) Application number: 01302714.9
(22) Date of filing: 23.03.2001
(51) Int. Cl.: G06F 17/60

(54) **Apparatus and method for providing information about sale of goods, method for displaying information about sale of goods, and computer-readable recording medium**

(30) Priority: 29.09.2000 JP 2000298881
(71) Applicant: FUJITSU LIMITED, Kawasaki-shi, Kanagawa 211-8588 (JP)
(72) Inventor: Kido, Toshiharu, c/o Fujitsu Per. Comp. Sys. Ltd., Inagi-shi, Tokyo (JP)
(74) Representative: Fenlon, Christine Lesley

(57) **Abstract**

A merchandise selling information providing apparatus (C, S) provides information on goods for sale at a request from a customer (C). A goods selling apparatus (S) thereafter receives the result of selection-of a item of the goods which the customer (C) wishes to purchase, and which has been selected from the goods information by the customer (C). If this selection results satisfies a predetermined condition, the goods selling apparatus (S) informs the customer (C) that the price of some other goods will be reduced at the time of user's next purchase or afterward.

## Description

The present invention relates to an apparatus and method for providing information about sale of goods, a method for displaying about sale of goods, and a computer-readable recording medium.

In recent years, with the development of the Internet technology, merchandise, commodities or goods selling systems have been proposed in which a server on the Internet provides a home page to a client terminal, and a user using the client terminal purchases a commodity product by using the home page.

A seller keeping an ordinary store (an actual store other than stores on the Internet) wishes to have chance customers become regular customers and therefore uses the following selling methods:
(1) a method of showing a customer a discount rate together with an article for sale; and
(2) a method of handing a coupon ticket such as a price discount coupon to a customer when the customer purchases a commodity. The customer can use the coupon ticket when purchasing a commodity at the store another day.

The method (1), however, is not effective in obtaining regular customers because the connection between a seller and a customer is cut after customer's purchasing of a commodity. With respect to the method (2), there is a problem of a coupon ticket being forged and the like.

It is therefore desirable to provide an apparatus and method for providing information about sale of goods, a method for displaying about sale of goods, and a computer-readable recording medium effective in increasing the possibility of a chance customer becoming a regular customer.

According to an embodiment of one aspect of the present invention, there is provided a method for providing information about sales of goods, comprising:
providing information on goods for sale at a request, receiving a result of selection of a item of the goods to be purchased from the goods information, and providing discount information when the selection result satisfies a predetermined condition, the discount information informing that the price of some of the another goods will be discounted at the time of next purchase of the another goods or afterward.

With an embodiment of the present invention, discount information can be provided which indicates that the price of some other goods will be discounted at the time of next purchase or afterward if the result of selection of the item of the goods to be purchased satisfies a predetermined condition, thereby increasing the possibility of a user (customer) becoming a regular customer.

In an embodiment of the present invention, information on users may be stored in a storage device, and when a user purchases a item of the goods corresponding to the result of the above-described selection, information for identification of the purchased item and information on a discount on the price of the another goods at the time of next purchase or afterward may be written to the storage device. Thus, information on users can be suitably managed in a simple manner.

Embodiments of other aspects of the present invention can provide an apparatus for providing information about sale of goods, a method for displaying about sale of goods, and a computer-readable recording medium having features corresponding to those described above.

An embodiment of another aspect of the present invention provides a method for displaying information about sale of goods using a client connected to a server via a network. In this method, the client requests the server to provide information on goods for sale, displays on a display device the goods information received from the server, transmits to the server the result of selection of a item of the goods to be purchased from the goods information displayed, receives from the server the discount information if the selection result satisfies a predetermined condition, the discount information informing that the price of some of the another goods will be reduced at the time of next purchase or afterward, and displays this information.

Embodiments of further aspects of the present invention provide a recording medium on which a program for executing processing for realizing the above-described method is recorded, and a terminal device having the features of the above-described client.

Reference will now be made, by way of example, to the accompanying drawings, in which:
Fig. 1 is a diagram showing the configuration of a merchandise selling system in an embodiment of the present invention;
Fig. 2 is a flowchart of the operation of the server shown in Fig. 1;
Fig. 3 is a diagram schematically showing the home page shown in Fig. 1;
Fig. 4 is a diagram showing an example of a display of the top page shown in Fig. 3;
Fig. 5 is a flowchart of product catalog page provision processing shown in Fig. 2;
Fig. 6 is a diagram showing an example of a display of the product catalog page shown in Fig. 3;
Fig. 7 is a diagram showing an example of a display of the product detail/purchase application page shown in Fig. 3;
Fig. 8 is a diagram showing an example of the customer data base shown in Fig. 1;
Fig. 9 is a flowchart of purchase confirmation page provision processing shown in Fig. 2;
Fig. 10 is a diagram showing an example of a goods (commodity) data base;
Fig. 11 is a diagram showing an example of a discount rate computation table;
Fig. 12 is a diagram showing an example of a discount offering period computation table;
Fig. 13 is a diagram showing an example of the purchase confirmation page shown in Fig. 3;
Fig. 14 is a diagram showing an example of a display of the user authentication page shown in Fig. 3;
Fig. 15 is a diagram showing an example of a display of the product catalog page shown in Fig. 3; and
Fig. 16 is a diagram showing another example of a display of the product catalog page shown in Fig. 3.

An embodiment of the present invention will be described with reference to the accompanying drawings. The embodiment described below is only an example and the present invention is not limited to the arrangement in the embodiment.

### <System Configuration>

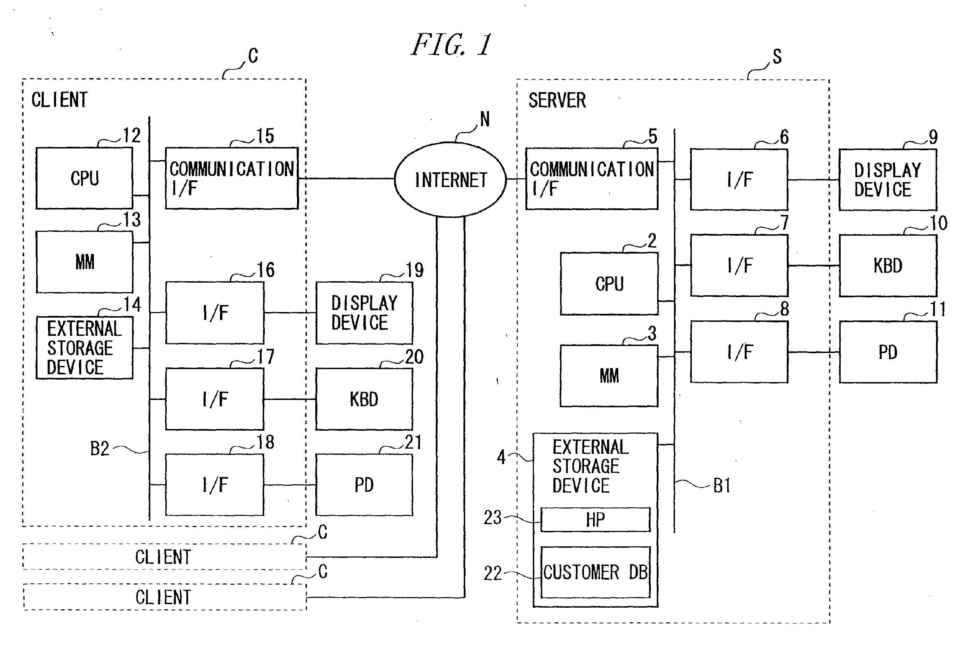

Fig. 1 shows the configuration of a network system in which goods selling system in an embodiment of the present invention can be realized. In this embodiment, the "goods" also are called "goods", "commodity" or "commodities". As shown in Fig. 1, the network system is constituted by a server S, and one or a plurality of clients C (three clients C shown in Fig. 1 by way of example) connected to the server through a network (e.g., the Internet, an intranet, an extranet, or the like; Internet N shown in Fig. 1).

Each client C may be connected to Internet N by dial-up IP connection using a telephone line, connection using a leased line, connection through a cable television system, or any other existing connection system. While the server S is illustrated as a unit using one computer in the example of Fig. 1, it may be formed by connecting a plurality of computers via a communication line.

Server S functions as a merchandise selling server presenting a World Wide Web (WWW) page 23 (home page 23, hereinafter referred to as "HP 23") at a request from each client C. Each client C is used by a user (customer) who wishes to purchase goods (commodities) through HP 23.

Server S is formed by using a personal computer (PC), a workstation (WS), a computer capable of operating as a host of PCs or WSs, a special-purpose server machine, or the like. Server S has a central processing unit (CPU) 2, a main memory (MM) 3, an external storage device 4, a communication interface (communication I/F) 5 connected to Internet N via a communication line, and interface circuits (I/F) 6 to 8. These components are connected to each other via a bus B1.

In this embodiment, the "client" is a general-purpose unit not closely related to the "server". However, the "server" and the "client" may be special-purpose units, such as a host computer and a terminal connected to the host computer.

A display device 9, such as a cathode ray tube, a liquid crystal display, or a plasma display, is connected to I/F 6. A keyboard (KBD) 10 is connected to I/F 7. A pointing device (PD) 11, such as a mouse, a trackball, a joystick, or a flat-space device, is connected to I/F 8.

External storage device 4 is formed by using a readable and rewritable recording medium, e.g., a hard disk, a floppy disk, an optical disk, or a magneto-optical disc and the like. External storage device 4 holds an operating system (OS) executed by the CPU 2, a plurality of kinds of programs, e.g., programs relating to communication protocols, and programs enabling server S to function as a WWW server, and data used when each of these programs is executed (e.g., text files, image files, HTML (HyperText Markup Language) files, constituting HP 23, etc.) HP 23 is formed of a plurality of Web pages linked by a Hyperlink. External storage device 4 also has a customer data base (customer DB) 22 for managing information on customers (customer information).

CPU 2 operates in accordance with commands input by an operator operating server S to copy necessary data from external storage device 4 to MM 3, load in accordance with input commands a program from external storage device 4 to MM 3, and execute the program. In this manner, CPU 2 executes processing relating to communication with each client C, e.g., processing for providing HP 23 at a request from client C.

MM 3 is used as a work area by CPU 2, and is also used as a video memory (VRAM) for storing data on a text, an image, etc., to be displayed on the screen of display device 9.

CPU 2 executes a program to function as a first providing section, a second providing section, or a writing section in accordance with an embodiment of the present invention, and MM 3 and external storage device 4 function as a storage device and a recording medium in accordance with an embodiment of the present invention.

Each client C has substantially the same configuration as server S, and is constituted by a personal computer (PC) in this embodiment. However, any of the existing computers capable of operating as a piece of data terminal equipment (DTE) on Internet N can be used as client C. For example, a workstation (WS), a mobile computer, a personal digital assistant such as an electronic notepad, a car navigation terminal, or a portable telephone (compatible with i-mode and CDMA-one 2) and the like may be used.

Client C has components corresponding to those of server S, i.e., a CPU 12, an MM 13, an external storage device 14, a communication I/F 15, and I/Fs 16 to 18. A display device 19 is connected to I/F 16, a keyboard 20 is connected to I/F 17, and a PD 21 is connected to I/F 18.

External storage device 14 holds programs, e.g., a program (WWW browser) for enabling client C to function as a WWW client, and various programs relating to a protocol for communication with server S, and holds data necessary for execution of each program.

CPU 12 operates in accordance with commands input by a user using client C to copy necessary data from external storage device 14 to MM 13, load in accordance with input commands a program from external storage device 14 to MM 13, and execute the program. In this manner, CPU 12 executes processing for requesting server S to provide HP 23, processing for displaying HP 23 provided by server S on display device 19, processing for transmitting to server S data which is input through HP 23, etc. MM 13 and external storage device 14 function as a recording medium in accordance with an embodiment of the present invention.

### (Operation)

The operations of server S and client C (method for providing information about sale of goods, method for displaying information about sale of goods) when a client C user (customer) purchases the goods through HP 23 in the above-described system will now be described. When a user using one client C purchases the goods through HP 23, he or she starts a WWW browser in client C. Client C and server S are connected to each other via Internet N. Next, the user designates a URL (Uniform Resource Locator) of HP 23 held in server S by using an input window of the WWW browser.

Then, CPU 12 of client C transmits a request for provision of HP 23 to server S over Internet N. When server S receives the request from client C through communication I/F 5, CPU 2 reads out data (a text file, an image file, and an HTML file) relating to the Web page corresponding to the URL in HP 23 from external storage device 4, and transmits the data to client C.

When client C receives th'e data relating to the Web page, CPU 12 displays the Web page on display device 19 on the basis of the received data by controlling I/F 16. The client C user can receive information on the Web page by viewing the Web page displayed on display device 19. If the user clicks PD 21 on letters, a symbol, or the like on the Web page with which a Hyperlink is set, a request for provision of the Web page at the other end of the link (address) is transmitted to server S.

When server S receives the request for provision of the Web page at the other end of the link, CPU 2 reads out data on the Web page corresponding to the provision request (address) and transmits the data to client C that has transmitted the provision request.

When client C receives the data on the Web page at the other end of the link from server S, CPU 12 of client C displays the Web page on display device 19 on the basis of received data, thereby enabling the client C user to refer to the Web page connected via the Hyperlink. By performing the above-described operation a necessary number of times, the client C user can refer to any Web page according to his or her need.

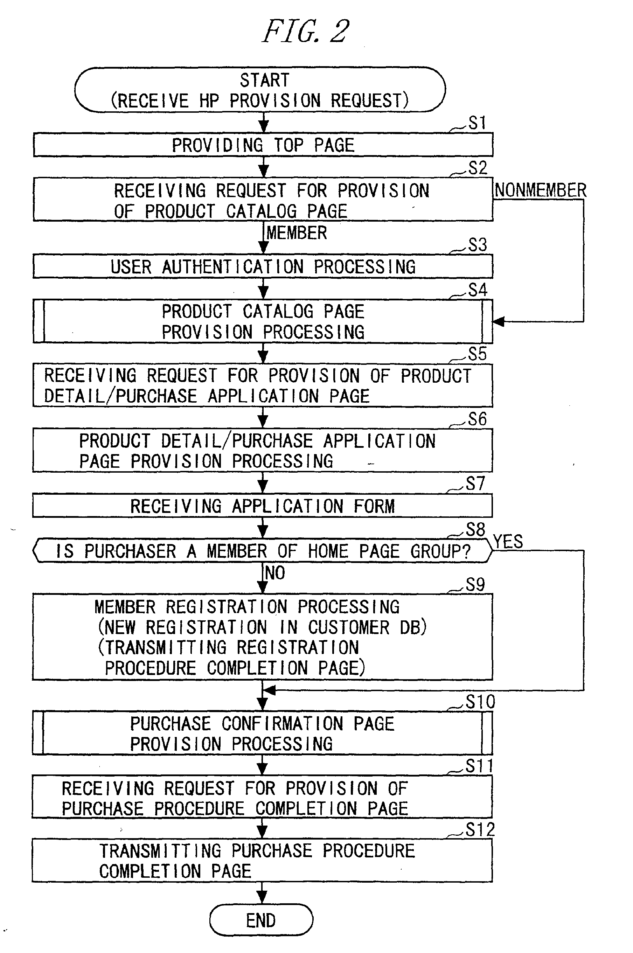

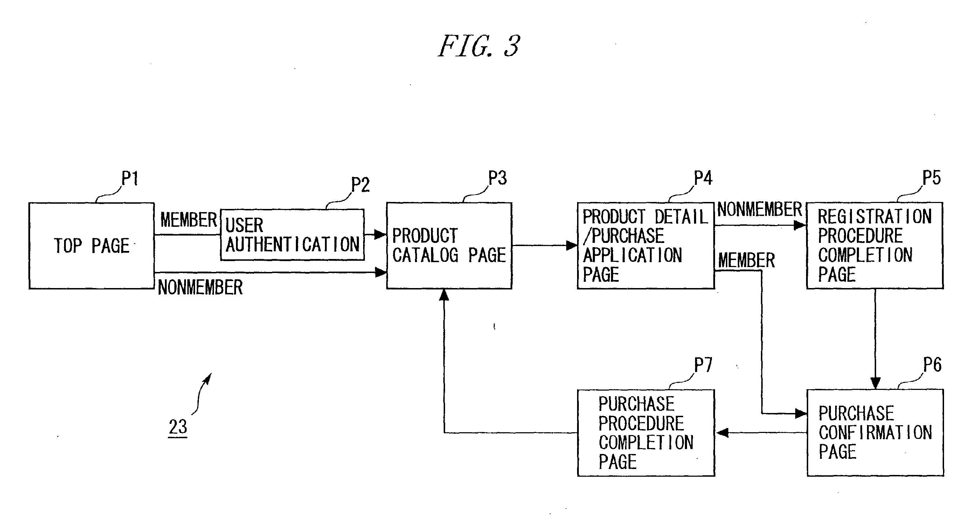

The operation of server S (processing performed by CPU 2 of server S) at the time of purchasing the goods using HP 23 will be described in detail with respect to different cases. Fig. 2 is a flowchart of the operation of server S (processing performed by CPU 2), and Fig. 3 is a diagram showing a part of the design of HP 23 provided from server S to client C.

### (First Example of Operation)

A first example of the operation when a person who is not a member of the HP 23 group purchases the goods through HP 23 will be described. When a client C user who is a nonmember purchases the goods through HP 23, he or she starts the WWW browser and designates the URL (address) of HP 23, and client C transmits the address of top page P1 of HP 23 as a HP 23 provision request to server S.

When server S receives the address of top page P1 from client C, the process shown in Fig. 2 is initiated. CPU 2 of server S reads out top page P1 of HP 23 from external storage device 4 on the basis of the received address and transmits top page P1 to client C over Internet N (step S1). When client C receives top page P1 through communication I/F 15, CPU 12 displays top page P1 on the screen of display device 19 by controlling I/F 16.

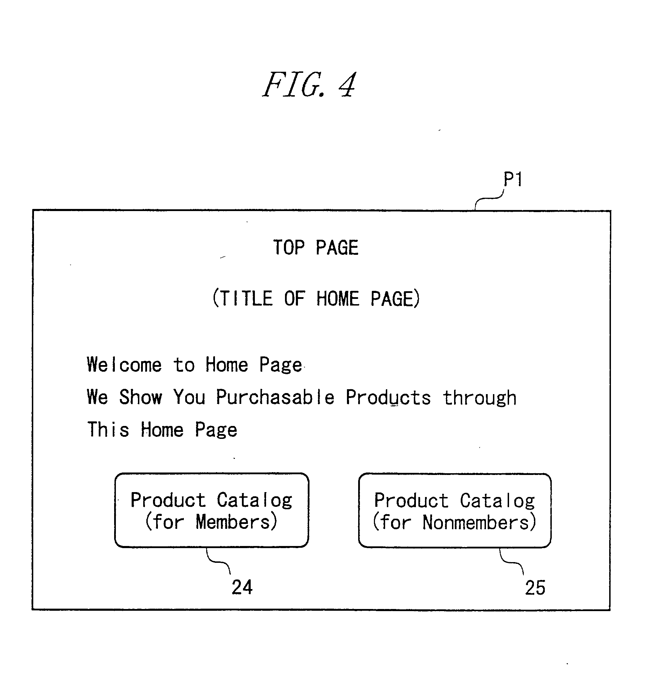

Fig. 4 shows an example of top page P1 displayed on the screen. On top page P1 of HP 23, the title of HP 23, sentences for introduction of HP 23 and an image are shown. Product catalog buttons 24 and 25 for proceeding to pages containing information on commodity products (goods) purchasable through HP 23 are provided on top page P1. A link for proceeding to a product catalog page P3 is set with each of buttons 24 and 25.

Product catalog button 24 is a button for members of the HP 23 group, and product catalog button 25 is a button for persons who are not members of the HP 23 group. In this example of the operation, the user is not a member of the HP 23 group and clicks product catalog button 25. The address of product catalog page P3 is then transmitted as a request for provision of this page from client C to server S.

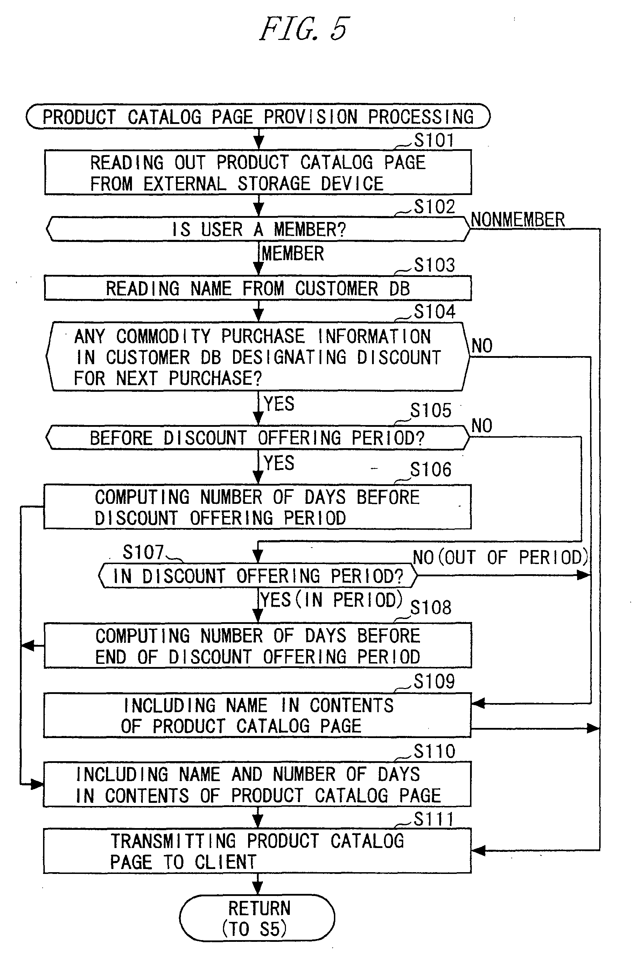

When server S receives the address of page P3 through I/F 5 (step S2), CPU 2 executes product catalog page provision processing (step S4). Fig. 5 is a flowchart showing the product catalog page provision processing. Referring to Fig. 5, CPU 2 reads out product catalog page P3 from external storage device 4 on the basis of the received address (step S101).

Subsequently, CPU 2 makes a determination as to whether the user is a member or a nonmember (step S102). This determination can be made on the basis of the received address. Since in this case the user is a nonmember, CPU 2 proceeds to step S111 and transmits the read product catalog page P3 to client C over Internet N (corresponding to the commodity information providing section for providing information on one commodity or a plurality of commodities for sale at a request). Thereafter, CPU 2 terminates the product catalog page provision processing, and advances the process to step S5 shown in Fig. 2.

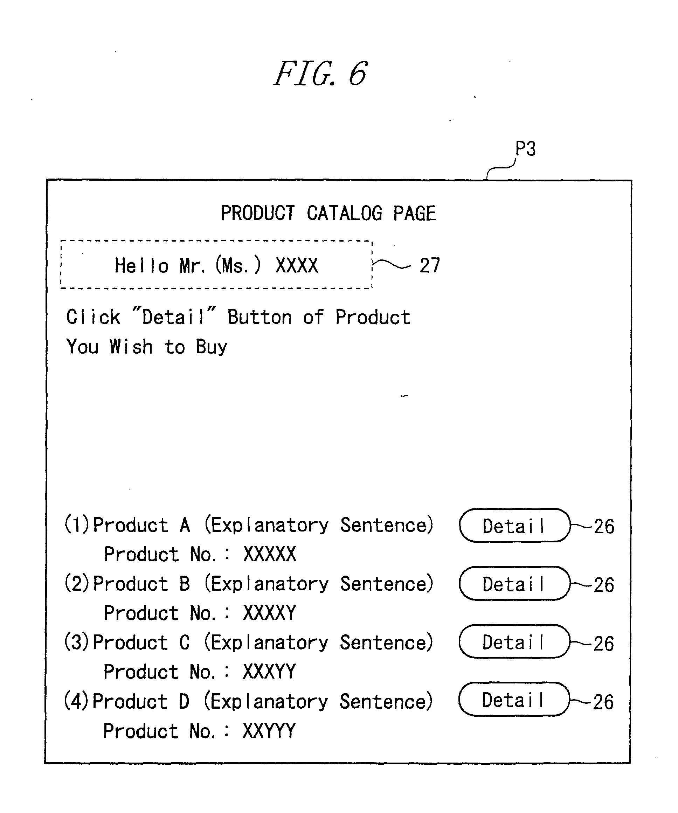

When client C receives product catalog page P3 through communication I/F 15, CPU 12 displays product catalog page P3 on the screen of display device 19 by controlling I/F 16. Fig. 6 is a diagram showing an example of product catalog page P3 displayed on the screen. As shown in Fig. 6, an index of one commodity product or a plurality of commodity products provided as products for sale on HP 23 is shown on product catalog page P3. In this example, an index including names of products and explanatory sentences is shown.

On product catalog page P3, a "Details" button 26 related to the name of each product in the index is provided. Each "Details" button 26 is linked to a product detail/purchase application page P4. The client C user can select one of the products that the user wishes to purchase by clicking the "Details" button 26 corresponding to the product.

The product catalog page P3 shown in Fig. 6 is a page for members, and a welcoming sentence 27 including "Welcome, Mr.(Ms.) XXXX !" and a name of a user (XXXX) is not shown on product catalog page P3 for nonmembers.

When one of "Details" buttons 26 is clicked, the address of product detail/purchase application page P4 and information (product number) for identification of the selected commodity product corresponding to the clicked "Details" button 26 are transmitted as a page 4 provision request from client C to server S over Internet N. The information (product number) for identification of the selected product corresponds to the result of selection of a desired purchase-target commodity in accordance with an embodiment of the present invention.

When server S receives the address (provision request) from page P3 through communication I/F 5 (step S5 shown in Fig. 2), CPU 2 executes product detail/purchase application page provision processing (step S6). That is, CPU 2 reads out product detail/purchase application page P4 from external storage device 4 and transmits the page to client C over Internet N.

When client C receives product detail/purchase application page P4 through communication I/F 15, CPU 12 displays product detail/purchase application page P4 on the screen of display device 19 by controlling I/F 16.

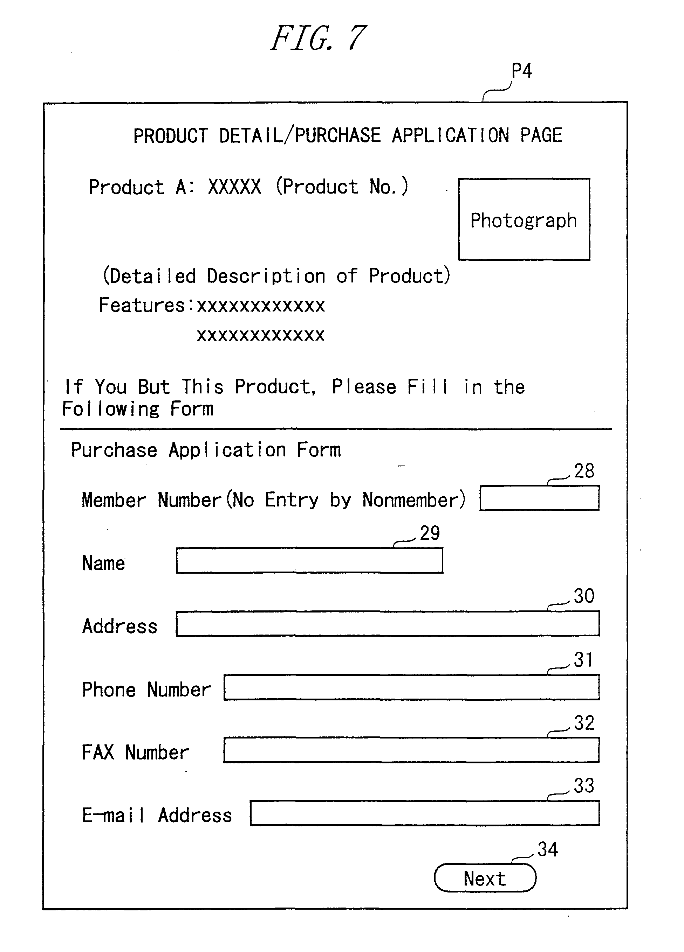

Fig. 7 is a diagram showing an example of product detail/purchase application page P4 displayed on the screen. As shown in Fig. 7, the name of the product selected on product catalog page P3, a photograph (image) of the product, and detailed explanation of the product (features, function, specifications) are shown as detailed product information on page 4.

An application form (purchase application form) for purchasing the product selected on product catalog page P3 is also shown on product detail/purchase application page P4. The purchase application form is also used as a member registration form used by a nonmember who wishes to become a member of the HP 23 group.

In the purchase application form are provided an input section 28 for inputting a member number of a purchaser (customer: client C user) in the HP 23 group (member identification information: member ID), and input sections 29 to 33 for inputting personal information about the purchaser, i.e., a name, an address, a telephone number, a FAX number, and an electric mail address. An occupation and a telephone number of the place of employment may be further included as personal information.

The nonmember user enters corresponding information items in input sections 29 to 33 of the purchase application form by using KBD 20. At this time, it is not necessary for the nonmember user to enter a member number since no member number has been assigned yet. Thereafter, the user clicks a "Next" button 34 provided on page P4. Then the entered contents of the purchase application form are transmitted to server S over Internet N.

When server S receives the entered contents of the purchase application form through I/F 5 (step S7 shown in Fig. 2), CPU 2 makes a determination as to whether the purchaser is a member or nonmember by checking whether there is a member number in the entered contents (step S8). Since in this case the purchaser (user) is a nonmember, the process advances to step S9 and CPU 2 executes member registration processing.

That is, CPU 2 takes an unused member number from a member number data base (member number DB, not shown) held in external storage device 4. CPU 2 then registers the taken member number and the received personal information in customer DB 22.

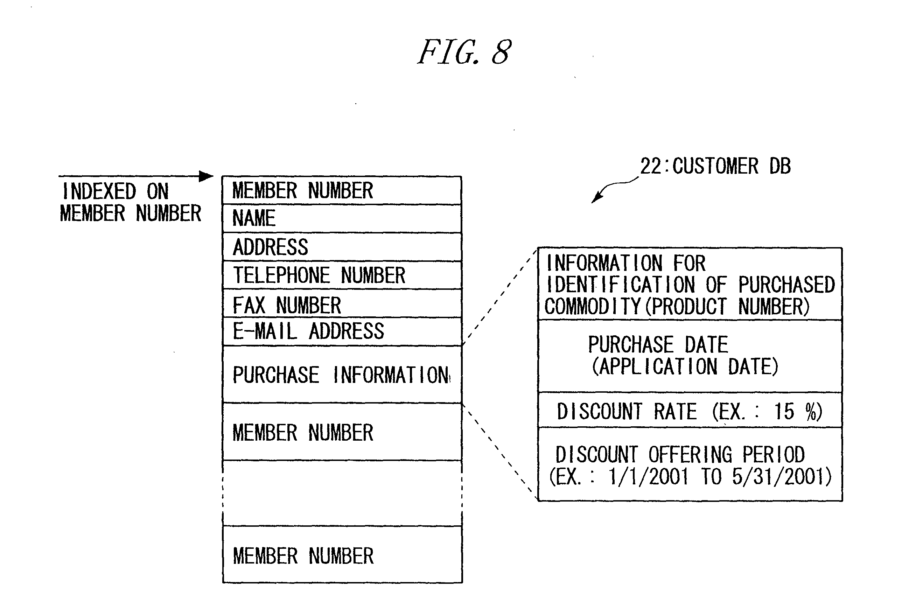

Fig. 8 shows an example of customer DB 22 shown in Fig. 1. Customer DB 22 holds a record containing personal information and purchase information with respect to each member number. Personal information includes a name, an address, a telephone number, a FAX number, an electronic mail address, etc., input through purchase application page P3.

Purchase information forms a record of purchase of commodity products producing a right to discount at the time of the next purchasing (purchased commodity record), which record includes particular information on a purchased product (e.g., a product name and a product ID number or the like) , a purchase date (purchase application date), a discount rate at the time of the next purchasing, discount period (discount offering period), etc.

Customer DB 22 may have any data structure as long as the above-described kinds of data are held and a search for necessary data can be made. The discount rate at the time of next purchasing corresponds to "information on discount of the price of commodities at the time of next purchasing of commodities or afterward" in accordance with an embodiment of the present invention.

CPU 2 stores in a space area of DB 22 the member number and the received information obtained in step S7, thereby newly registering a member. CPU 2 then reads out a registration procedure completion page P5 (Fig. 3) from external storage device 4 and transmits the page to client C over Internet N.

CPU 12 of client C displays on display device 19 registration procedure completion page P5 received from server S. On registration procedure completion page P5, information about the completion of the member registration (e.g., a sentence "Member registration is completed"), the member number and a password is displayed, thereby informing the client C user of the member number (assigning the number).

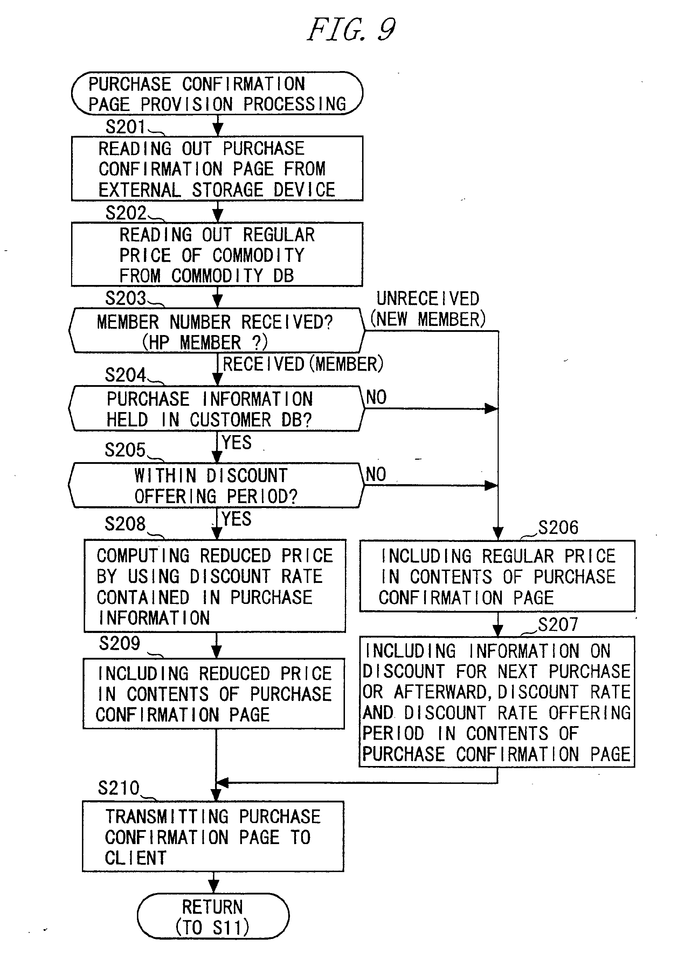

Next, CPU 2 of server S executes purchase confirmation page provision processing (step S10 shown in Fig. 2). Fig. 9 is a flowchart showing the purchase confirmation page provision processing. Referring to Fig. 9, CPU 2 first reads a purchase confirmation page P6 from external storage device 4 (step S201).

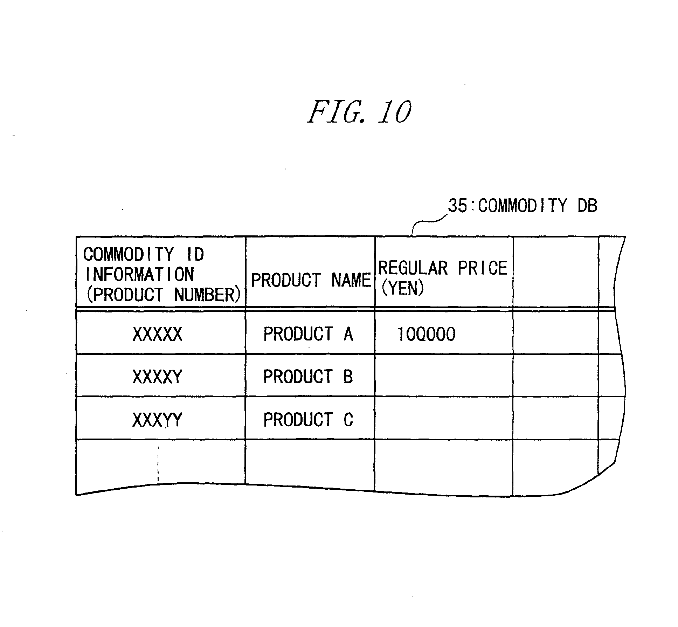

CPU 2 then reads out the regular price of the commodity from a commodity data base (commodity DB) 35 held in external storage device 4 (step S202). Fig. 10 shows an example of commodity DB 35. Commodity data base DB holds a record containing information on the commodity products shown on pages P3, P4, and P6, e.g., product names, regular prices, explanatory sentences, and images (photographs) and the like related to the identification information items corresponding to the commodity products. The identification information on each product for sale (the ID number (product number) of each product in this example) is used as a search key in DB 35. CPU 2 reads out the regular price corresponding to the product number received from client C (selected by the user).

Next, CPU 2 makes a determination as to whether the purchaser is a newly-registered member or a previously-registered member by checking whether a member number has been received from client C (step S203). Since in this example the user is a new member newly registered by member registration processing (step S9), the process moves to step S206.

In step S206, CPU 2 includes the regular price read out in step S202 in the contents of purchase confirmation page P6. Subsequently, CPU 2 includes information that a discount will be made for the purchaser concerned at the time of next purchasing of commodities or afterward (information on offering of a discount at the time of next purchasing or afterward), a discount rate, and a discount offering period in the contents of purchase confirmation page P6 (step S207).

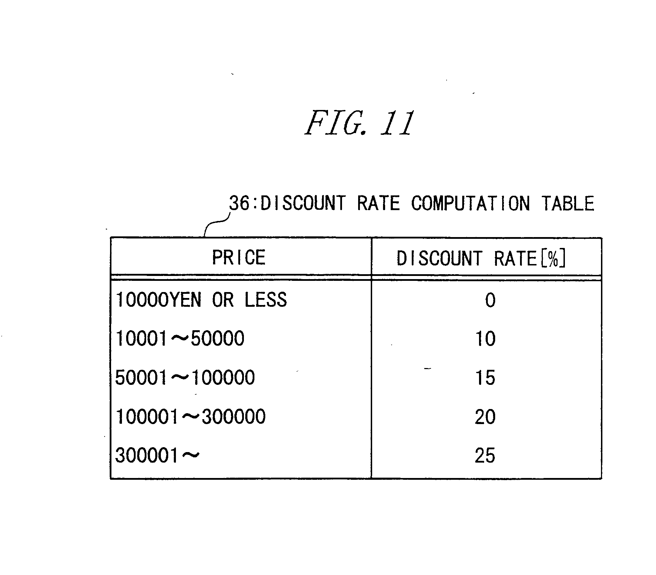

At this time, CPU 2 obtains a discount rate by using a discount rate computation table 36 held in external storage device 4 in advance. Fig. 11 is a diagram showing an example of discount rate computation table 36. Discount rate computation table 36 contains discount rates [%] related to predetermined price ranges. CPU 2 reads out from discount rate computation table 36 the discount rate corresponding to the price range into which the regular price falls. Alternatively, a discount rate may be computed from the regular price by using a predetermined function.

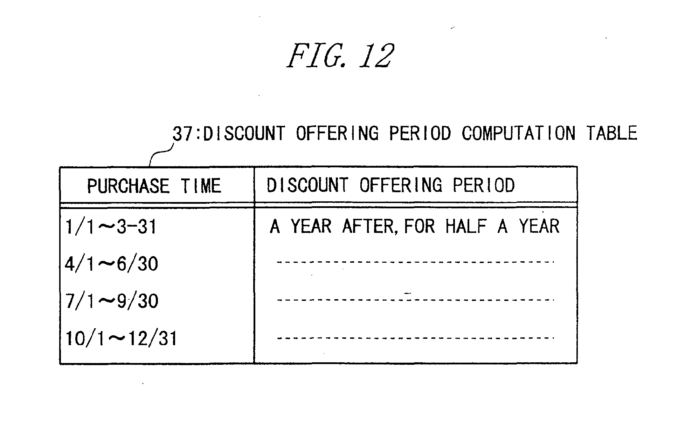

Also, CPU 2 obtains a discount offering period by using a discount offering period computation table 37 stored on external storage device 4 in advance. Fig. 12 is a diagram showing an example of discount offering period computation table 37. Discount offering period computation table 37 contains discount offering periods related to times of year representing commodity purchase times. CPU 2 reads out from discount offering period computation table 37 the discount offering period corresponding to the time of year representing the purchase date (purchase application date). The discount offering period may be determined by considering the purchased commodity.

Thereafter, CPU 2 transmits the purchase confirmation page containing the regular price, the discount offering information, the discount rate and the discount rate offering period to client C over Internet N (step S210). The purchase confirmation page provision processing is then terminated and the process moves to step S11 shown in Fig. 2.

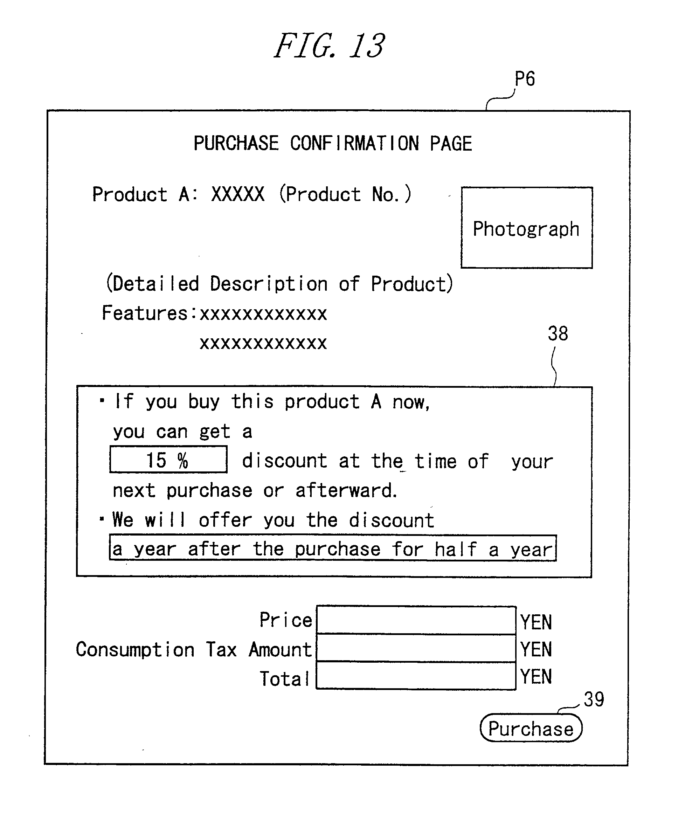

When client C receives purchase confirmation page P6 through I/F 15, CPU 12 displays purchase confirmation page P6 on the screen of display device 19 by controlling I/F 16. Fig. 13 is a diagram showing an example of purchase confirmation page P6 displayed on the screen. On purchase confirmation page P6 are shown the price of the commodity, the amount of a consumption tax, and the sum of the price and the consumption tax as well as the detailed information on the commodity shown on page P4. In this case the regular price is shown as the price of the commodity.

Purchase confirmation page P6 includes an information section 38 containing information "If you buy this product A now, you can get a 15 % discount at the time of your next purchasing or afterward. We will offer you the discount a year after the purchase for half a year". This information section corresponds to the discount information transmitted from server S in accordance with an embodiment of the present invention.

The client C user clicks a "Purchase" button 39 provided on purchase confirmation page P6 if the user wants to purchase the commodity. CPU 12 of client C then transmits the address of a purchase procedure completion page P7 as a page P7 provision request to server S.

Server S receives the page P7 provision request through I/F 5, CPU 2 receiving the request (step S11 shown in Fig. 2) searches customer DB 22 by referring to the member number of the user in the index, reads out the corresponding record, and stores, as purchase information in the record, the product number, the purchase data, the discount rate and the discount offering period (discount period) determined as information specific to the commodity purchased by the user at the present time.

Subsequently, CPU 2 reads out purchase procedure completion page P7 from external storage device 4 and transmits the page to client C (step S12). When client C receives purchase procedure completion page P7, it displays the page on display device 19. On page P7, information on the completion of the purchase procedure, words of thanks (not shown), etc., are shown.

Thereafter, the administrator of HP 23 prepares the commodity by referring to customer DB 22, and delivers the commodity by parcel post or home-delivery service to the address of the user together with a sheet for payment of the price. The user receives the commodity provided in this manner. The payment system may alternatively be arranged so that the user can input a credit card number or the like through page P7 to perform payment by electronic settlement.

### (Second Example of Operation)

A second example of the operation when a member of the HP 23 group purchases a commodity through HP 23 will be described. When a client C user purchases a commodity through HP 23, he or she starts the WWW browser and designates the URL (address) of HP 23, and client C transmits the address of top page P1 of HP 23 as a HP 23 provision request to server S.

When server S receives the address of top page P1 from client C, the process shown in Fig. 2 is initiated. CPU 2 of server S reads out top page P1 of HP 23 from external storage device 4 on the basis of the received address and transmits top page P1 to client C over Internet N (step S1).

When client C receives top page P1 through communication I/F 15, CPU 12 displays top page P1 on display device 19 by controlling I/F 16. Since the user is a member of the HP 23 group, he or she clicks product catalog button 24. Then the address of product catalog page P3 is transmitted as a request for provision of this page from client C to server S.

When server S receives the address of product catalog page P3 through I/F 5 (step S2), CPU 2 reads out a user authentication page P2 from external storage device 4 and transmits the page to client C. Client C receives page P2 and displays it on the screen of display device 19.

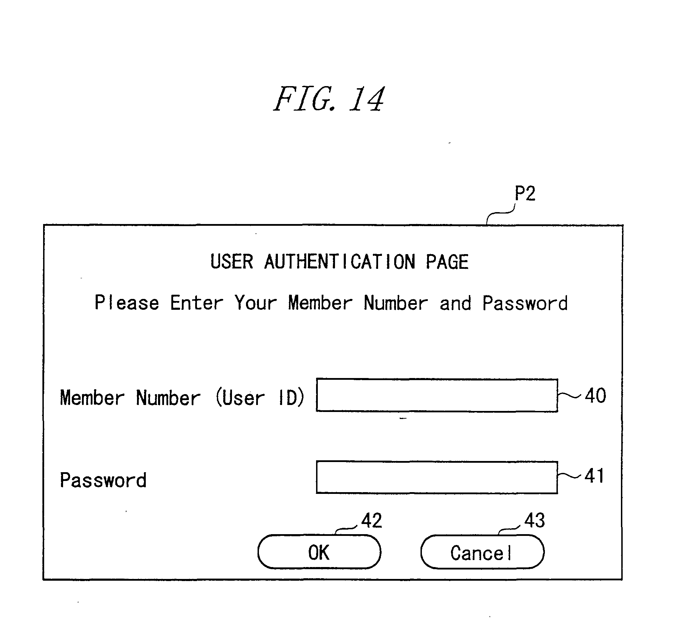

Fig. 14 is a diagram showing an example of user authentication page P2 displayed on the screen. A member number input section 40, a password input section 41, an "OK" button 42, and a "Cancel" button 43 are provided on page P2. The user enters, by using KB 20, the member number and the password obtained in advance through page P5, and clicks "OK" button 42. Then the member number and the password are transmitted from client C to server S.

Receiving the member number and the password through I/F 5, CPU 2 of server S performs user authentication processing using user authentication data (not shown) held in external storage device 4 , and starts product catalog page provision processing if the member number and the password are correct (step S4).

If the member number and the password are incorrect, the user is requested to again input the member number and password. If the correct member number and password are not obtained even after performing user authentication processing a predetermined number of times, the request for provision of product catalog page P3 for members is refused.

When the process advances to step S4, CPU 2 executes product catalog page provision processing shown in Fig. 5. First, CPU 2 reads out product catalog page P3 from external storage device 4 on the basis of the received address (step S101). CPU 2 then makes a determination as to whether the user is a member or a nonmember on the basis of the result of user authentication processing (step S102). Since in this case the user is a member, the process advances to step S103.

In step S103, CPU 2 finds the record corresponding to the member number by searching customer DB 22 (Fig. 8) using the member number as a search key, and reads out the name of the user in the record to MM 3. CPU 2 then makes a determination as to whether there is information on the purchase of a commodity producing a right to discount at the time of the next purchasing or afterward (step S104). If there is such purchase information, the process advances to step S105. If there is no such purchase information, the process moves to step S109.

When the process advances to step S105, CPU 2 makes a determination as to whether the present time is before a discount offering period by referring to a discount offering period in the purchase information. If the present time is before a discount offering period, the process advances to step S106. In other cases, the process moves to step S107.

When the process advances to step S106, CPU 2 computes the number of days before from the present day to the beginning of the discount offering period using the discount offering period. CPU 2 then includes, in the contents of product catalog page P3, the user's name and the number of days before the beginning of the discount offering period obtained (step S110). Thereafter, CPU 2 transmits product catalog page P3 containing the name and the number of days to client C (step S111).

When the process moves to step S107 after the determination that the present time is not before a discount offering period, CPU 2 makes a determination as to whether the present time is in a discount offering period by referring to a discount offering period in the purchase information. If the present time is in a discount offering period, the process advances to step S108. If the present time is not in a discount offering period, it is determined that the present time is past a discount offering period, and the process moves to step S109.

When the process advances to step S108, CPU 2 computes the number of days before the end of the discount offering period from the present day and the discount offering period. CPU 2 then includes, in the contents of product catalog page P3, the user's name and the number of days before the end of the discount offering period obtained (step S110). Thereafter, CPU 2 transmits product catalog page P3 containing the name and the number of days to client C (step S111).

When it is determined in step S104 that there is no purchase information to be considered, or when it is determined in step S107 that the present time is past a discount offering period, the process moves to step S109 and CPU 2 includes the name obtained in step S103 in the contents of product catalog page P3. Thereafter, CPU 2 transmits product catalog page P3 containing the name and number of days to client C (step S111).

When client C receives product catalog page P3, it displays this page P3 on display device 19. If there if there is no purchase information to be considered in the record in DB 22 corresponding to the user, or if the present time is past a discount offering period, product catalog page P3 shown in Fig. 6 is displayed on display device 19 and welcoming sentence 27 including the user's name is displayed.

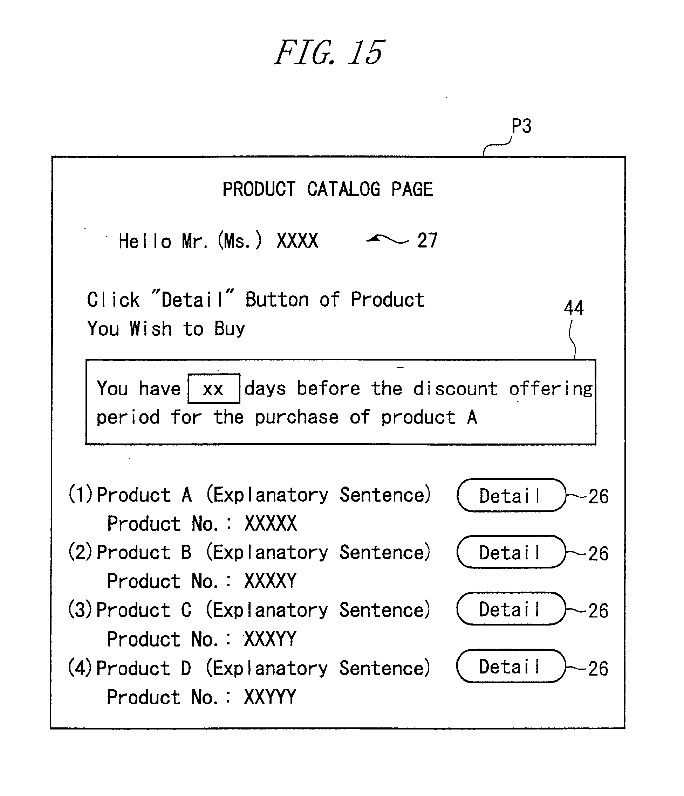

In the case where the present time is before a discount offering period, an information sentence 44 including the number of days from the present day to the beginning of the discount offering period is displayed on display device 19, as shown in Fig. 15. In the example shown in Fig. 15, a sentence "You have xx days (XX: the number of days) before the discount offering period for the purchase of product A" is displayed as information sentence 44.

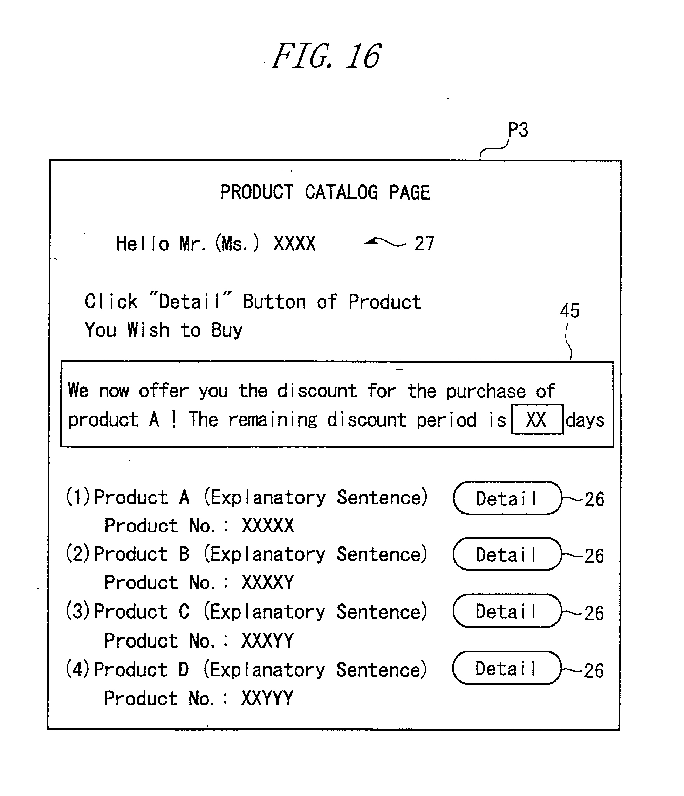

In the case where the present time is in a discount offering period, display device 19 displays product catalog page P3 on which an information sentence 45 including the number of days from the present day to the end of the discount offering period is shown, as shown in Fig. 16. In the example shown in Fig. 16, sentences "We now offer you the discount for the purchase of product A ! The remaining discount period is XX days (XX: the number of days)" are displayed as sentence 45. The information sentences 44 and 45 correspond to "information on a discount offering period" transmitted from the merchandise selling server in accordance with an embodiment of the present invention to be displayed by the display device at the client.

When the user clicks "Detail" button 26 on product catalog page P3 corresponding to the commodity that the user wishes to purchase, product detail/purchase application page P4 corresponding to the selected commodity is provided from server S (step S6 shown in Fig. 2), as is that in the first example of the operation. The user enters the member number and personal information in the purchase application form on page P4 and clicks "Next" button 34. Then the contents of the entries in the purchase application form are transmitted to server S.

When server S receives the contents of the entries in the purchase application form (step S7 shown in Fig. 2), CPU 2 makes a determination as to whether the purchaser is a member or nonmember by checking whether there is a member number in the contents of the entries (step S8). Since in this case the member number is contained in the contents of the entries, the process advances to step S10 and CPU 2 executes the purchase confirmation page provision processing shown in Fig. 9 (step S10).

Referring to Fig. 9, CPU 2 reads out purchase confirmation page P6 from external storage device 4 (step S201), and reads out the regular price of the commodity from customer DB 35 held in external storage device 4 (step S202).

Next, CPU 2 makes a determination as to whether the purchaser is a newly-registered member or a previously-registered member by checking whether a member number has been received from client C (step S203). Since in this example the user is a member, and since the member number has been received through the purchase application form, the process advances to step S204.

In step S204, CPU 2 makes a determination as to whether purchase information is contained in the record corresponding to the member number by referring to customer DB 22 by using the member number. If purchase information is contained, the process advances to step S205. If no purchase information is contained, the process moves to step S206.

When the process advances to step S205, CPU 2 makes a determination as to whether the present time is in a discount offering period by referring to a discount offering period in the purchase information contained in the record. If the present time is in a discount offering period, the process advances to step S208. If the present time is not in a discount offering period, the process moves to step S206.

When the process advances to step S208, CPU 2 computes a reduced price from the regular price and the discount rate contained in the purchase information. Subsequently, CPU 2 includes the reduced price in the contents of purchase confirmation page P6. In step S206 or S209, the consumption tax amount is computed from the regular price or the reduced price, the sum of the regular price and the consumption tax amount is also computed, and the regular price or the reduced price and the sum are included in the contents of purchase confirmation page P6. CPU 2 then transmits purchase confirmation page P6 including the reduced price to client C (step S210).

During the discount offering period, as descried above, purchase confirmation page P6 including the reduced price determined according to the predetermined discount rate is transmitted to client C and displayed on display device 19 at client C. In this case, on purchase confirmation page P6 (Fig. 13), the reduced price is shown in the price indication section, and the consumption tax amount computed from the reduced price and the sum of the reduced price and the consumption tax amount are indicated. In this case, information section 38 is not displayed. However, an information sentence "We made a discount of 15 % from the regular price", for example, may be displayed in place of information section 38.

With respect to step S206 and the other subsequent steps, the operation in this second example of the present invention is the same as that in the above-described first example of the operation, and the description therefor will not be repeated. Before a discount offering period, however, an information sentence "You can get a 15 % discount from the indicated price during a discount offering period" may be displayed. The operation with respect to the subsequent steps is substantially the same as that in the first example of the operation, and the description for it will not be repeated.

### <Effects of Embodiment>

In the merchandise selling system in this embodiment, when a client C user (customer) purchases a commodity through HP 23, the user is informed that the seller will give a discount at a predetermined rate on the price of commodities at the time of the next purchase or afterward. This information has an effect of bringing the customer to again purchase a commodity through HP 23. That is, it is possible to motivate the customer to become a regular customer or to increase the possibility of the customer becoming a regular customer.

Also, information on a situation in which a customer has purchased a commodity is stored as purchase information in customer DB 22 together with personal information about the customer. When the customer again accesses HP 23, information on a discount offering period is given to the customer. Thus, information on purchases of commodities made by a customer can be suitably stored in a simple manner. Also, information on a discount offering time is provided to a customer to increase the possibility of the customer purchasing a commodity through HP 23 a number of times.

For example, with respect to a commodity such as a personal computer changed in specifications or design in a certain cycle, a discount offering period may be set in correspondence with such a change expected to be made. Under such a condition, a commodity may be purchased by a customer in each of a plurality of model cycles.

Even if a person or an organization do a small-scale retail business by controlling HP 23, it can suitably and easily maintain customer information by storing personal information and purchase information about customers through the Internet N in DB 22. Also, there is no risk of unauthorized use of the system, such as forgery of distributed coupons.

### <Examples of Modification>

The above-described embodiment may be modified as described below.

In the above-described embodiment, information on a discount at the time of next purchase or afterward is shown on a purchase confirmation page to a customer. However, such information may alternatively be shown on a nonmember product catalog page P3. This is effective in increasing the number of members of the HP 23 group by motivating persons viewing the page to become members of the HP 23 group.

In the above-described embodiment, a purchase of some of the commodity products for sale shown on product catalog page P3 is set as a discount condition for a discount at the time of next purchase or afterward. However, a different discount condition may be set with respect to purchases of particular commodities. For example, a discount is offered on condition that the purchase price of a commodity is equal to or higher than a predetermined price, that the number of purchase commodities is equal to or larger than a predetermined number, or that the total sum of the prices of a plurality of commodities is equal to or higher than a predetermined price.

While the server in the above-described embodiment is formed of one computer, the same functions as those of the server in the embodiment may be realized by connecting a plurality of computers via a network and by performing distributed data processing.

The above-described embodiment of the present invention is realized by forming a network system constituted by a server and clients connected to each other through a network. However, other embodiments of the present invention are not limited to such a system.

For example, the advantage of the present invention can also be achieved by a single unit (stand-alone unit) which executes the processings performed by each of the server and the clients in the above-described embodiment, i.e., processing for display of information on commodities for sale, processing for selection of a commodity which a customer wishes to purchase, and processing for display of discount information for the above-described purpose when a selected commodity satisfies a predetermined condition.

In the above-described embodiment, a commodity similar to one already purchased is set as a discount object at the time of next purchase. However, other embodiments of the present invention are not limited to such a discount method. For example, predetermined commodities may be handled as one group, and each of the commodities belonging to the same group as a commodity previously purchased may be treated as a discount object.

In such a case, information on groups is added to records in commodity data base 35 by being related to product numbers of commodity products. Alternatively, a data base is newly formed which has records formed by information on groups related to product numbers of commodity products, thereby making it possible to identify any of the groups from the product number of one of the commodities belonging to the group, and to identify any of commodities belonging to each group from the group name.

At the time of display of an information sentence or the purchase confirmation page, the product number of a selected commodity may be used to identify the group to which the commodity belongs and to identify the other commodities belonging to the group, and the name of the group or the names of all the commodities belonging to the group, each of which is to be treated as a discount object, may be displayed.

Also, at the time of computation of a reduced price with respect to a purchase of a commodity, the product numbers of commodities contained in the purchase information corresponding to the purchaser (member number) may be used to identify the groups to which the commodities belong in the above-described manner, and a determination may be made as to whether the commodity presently selected as an object of purchasing belongs to some of the groups, thereby enabling determination as to whether a discount should be made.

Although the above description has referred to a program stored on a computer-readable medium, it will be appreciated that a computer program embodying the present invention need not be stored on a computer-readable medium and could, for example, be embodied in a signal such as a downloadable data signal provided from an Internet website. The appended claims are to be interpreted as covering a computer program by itself, or as a record on a carrier, or as a signal, or in any other form.

## Claims

1. An apparatus for providing information about sale of goods, comprising:
a first providing section providing information on goods for sale at a request; and
a second providing section providing discount information when a result of selection of a item of the goods to be purchased from the goods information satisfies a predetermined condition, the discount information informing that the price of some of the another goods will be discounted at the time of next purchase of the another goods or afterward.

2. An apparatus according to Claim 1, further comprising:
storage device storing information on users; and
a writing section writing, to said storage device, information relating to a user who has purchased the item of the goods corresponding to the result of the selection, the information relating to the user including information for identification of the purchased item, and information on a discount on the price of some of the another goods at the time of next purchase of the another goods or afterward.

3. An apparatus according to Claim 2, wherein said writing section writes to said storage device one of the rate of discount of the price and a discount in the price of the another goods as purchase-targets at the time of next purchase of the another goods or afterward, one of the rate of discount of the price and a discount in the price being written as the information on the discount.

4. An apparatus according to Claim 2 or 3, wherein said writing section writes to said storage device a discount offering period during which the price of some of the another goods are discounted, the discount offering period being written as the information on the discount.

5. An apparatus according to Claim 4, wherein said first providing section provides information on the discount offering period when providing information on the goods.

6. An apparatus according to Claim 4 or 5, wherein, if the present day is before the beginning of the discount offering period read out from the storage device, said first providing section provides information on the number of days from the present day to the beginning of the discount offering period as the information on the discount offering period.

7. An apparatus according to Claim 5, wherein, if the present day is in the discount offering period read out from the storage device, said first providing section provides information on the number of remaining days in the discount offering period as the information on the discount offering period.

8. An apparatus according to any preceding claim, wherein the predetermined condition is that any item or a particular item contained in the goods information is selected as the item of the goods to be purchased.

9. A method for providing information about sale of goods, comprising:
providing information on goods for sale at a request;
receiving a result of selection of a item to be purchased from the goods information; and
providing discount information when the result of selection satisfies a predetermined condition, the discount information informing that the price of some of the another goods will be discounted at the time of next purchase of the another goods or afterward.

10. A method according to Claim 9, further comprising writing, to a storage device, information relating to a user when the user purchases the item of the goods corresponding to the result of the selection, the information relating to the user including information for identification of the purchased item, and information on a discount on the price of some of the another goods at the time of next purchase of the another goods or afterward.

11. A method according to Claim 10, wherein, in said writing step, one of the rate of a discount of the price and a discount in the price of the another goods as purchase-targets at the time of next purchase of the another goods or afterward is written as the information on the discount to the storage device.

12. A method according to Claim 10 or 11, wherein, in said writing step, a discount offering period during which the price of some of the another goods is discounted is written as the information on the discount to the storage device.

13. A method according to Claim 12, wherein, in said providing step of providing the goods information, information on the discount offering period is provided.

14. A method according to Claim 13, wherein, in said providing step of providing the goods information, if the present day is before the beginning of the discount offering period read out from the storage device, information on the number of days from the present day to the beginning of the discount offering period is provided as the information on the discount offering period.

15. A method according to Claim 13, wherein, in said providing step of the goods information, if the present day is in the discount offering period read out from the storage device, information on the number of remaining days in the discount offering period is provided as the information on the discount offering period.

16. A method according to any one of claims 9 to 15, wherein the predetermined condition is that any item or a particular item contained in the goods information is selected as the item of the goods to be purchased.

17. A method of displaying information about sale of goods through a client connected to a server via a network, said method comprising the following steps performed by the client:
requesting the server to provide information on goods for sale;
displaying on a display device the goods information received from the server;
transmitting to the server a result of selection of a item of the goods to be purchased from the goods information;
receiving, from the server, discount information when the result of selection satisfies a predetermined condition, the discount information informing that the price of some of the another goods will be discounted at the time of next purchase of the another goods or afterward; and
displaying the received discount information on the display device.

18. A method according to Claim 17, wherein the client displays on the display device one of the rate of a discount of the price and a discount in the price of the another goods as purchase-targets at the time of next purchase of the another goods or afterward.

19. A method according to Claim 17 or 18, wherein the client displays on the display device a discount offering period during which the price of some of the another goods are discounted.

20. A method according to Claim 19, wherein the client displays on the display device information on the discount offering period together with the information on the another goods.

21. A method according to Claim 20, wherein, if the present day is before the beginning of the discount offering period, the client displays on the display device information on the number of days from the present day to the beginning of the discount offering period as the information on the discount offering period.

22. A method according to Claim 20, wherein, if the present day is in the discount offering period, the client displays on the display device information the number of remaining days in the discount offering period as the information on the discount offering period.

23. A computer-readable recording medium is recorded a program in order that a computer execute processing for providing information about sale of goods, said program comprising:
a first providing step of providing information of one or a plurality of goods for sale at a request; and
a second providing step of providing discount information when a result of selection of a item of the goods to be purchased from the goods information satisfies a predetermined condition, the discount information informing that the price of some of the another goods will be discounted at the time of next purchase of the another goods or afterward.

24. A recording medium according to Claim 23, wherein said program further comprises a step of writing, to a storage device, information relating to a user when the user purchases the item corresponding to the result of the selection, the information relating to the user including information for identification of the purchased item, and information on a discount on the price of some of the another goods at the time of next purchase of the another goods or afterward.

25. A recording medium according to Claim 24, wherein, in said writing step, one of the rate of a discount of the price and a discount in the price of the another goods as purchase-target at the time of next purchase of the another goods or afterward is written as the information on the discount to the storage device.

26. A recording medium according to Claim 24 or 25, wherein, in said writing step, a discount offering period during which the price of some of the another goods is discounted is written as the information on the discount to the storage device.

27. A recording medium according to Claim 26, wherein, in said first providing step, information on the discount offering period is provided.

28. A recording medium according to Claim 27, wherein, in said first providing step, if the present day is before the beginning of the discount offering period read out from the storage device, information on the number of days from the present day to the beginning of the discount offering period is provided as the information on the discount offering period.

29. A recording medium according to Claim 27, wherein, in said first providing step, if the present day is in the discount offering period read out from the storage device, information on the number of remaining days in the discount offering period is provided as the information on the discount offering period.

30. A method according to any one of claims 23 to 29, wherein the predetermined condition is that any item or a particular item contained in the goods information is selected as the item of goods to be purchased.

31. A computer-readable recording medium is recorded a program in order that a computer as a client connected with a server through a network execute processing for displaying information about sale of goods, said program comprising the following steps performed by the client:
requesting the server to provide information on goods for sale;
displaying on a display device the goods information received from the server;
transmitting to the server a result of selection of a item of the goods to be purchased from the goods information; and
displaying discount information when the selection result satisfies a predetermined condition, the discount information informing that the price of some of the another goods will be discounted at the time of next purchase of the goods or afterward.

32. A recording medium according to Claim 31, wherein said program further comprises a step performed by the client to display on the display device one of the rate of a discount of the price and a discount in the price of purchase-object goods at the time of next purchase of the goods or afterward.

33. A recording medium according to Claim 31 or 32, wherein said program further comprises a step performed by the client to display on the display device a discount offering period during which the price of some of the another goods is discounted.

34. A recording medium according to Claim 33, wherein said program further comprises a step performed by the client to display on the display device information on the discount offering period together with the information on the goods.

35. A recording medium according to Claim 34, wherein said program further comprises a step performed by the client to display on the display device information on the number of days from the present day to the beginning of the discount offering period as the information on the discount offering period if the present day is before the beginning of the discount offering period.

36. A recording medium according to Claim 34 or 35, wherein said program further comprises a step performed by the client to display the client displays on the display device information on the number of remaining days in the discount offering period as the information on the discount offering period, if the present day is in the discount offering period.

37. An apparatus according to any one of claims 1 to 8, wherein said apparatus is connected to a network;
said first providing section, when receives a request for provision of the information on goods from a transmission source of the request, provides the goods information corresponding to the request with the transmission source; and
said second providing section provides the discount information to the transmission source via the network.

38. A method according to any one of Claims 9 to 22, wherein the request is received via a network from the transmission source, and the discount information is provided via the network to the transmission source.

39. A recording medium according to any one of Claims 23 to 36, where the request is received via a network from the transmission source, and the discount information is provided via the network to the transmission source.

40. A terminal device connected to a server via a network, said terminal device comprising:
a transmission section for transmitting a request for information on goods for sale and a result of selection of a item of the goods to be purchased from the goods information to said server; and
a display processing section for displaying information received from said server on a display device, the information received from the server comprising information on the goods provided at the request, and discount information provided when the selection result satisfies a predetermined condition, the discount information informing that the price of some of the another goods will be discounted at the time of next purchase of the goods or afterward.

41. A computer program which, when loaded into a computer, causes the computer to become apparatus as claimed in any one of claims 1 to 8 or 37.

42. A computer program which, when run on a computer, causes the computer to carry out a method as claimed in any one of claims 9 to 22 or 38.

43. A computer program which, when loaded into a computer, causes the computer to become a terminal device as claimed in claim 40.
